# EUROPEAN PATENT APPLICATION

(11) **EP 0 707 181 A1**
(43) Date of publication of application: **17.04.1996**
(21) Application number: 95307273.3
(22) Date of filing: 13.10.1995
(51) Int. Cl.: F24H 9/14, F24H 8/00, F24H 1/36

(54) **Gas boilers**

(30) Priority: 14.10.1994 GB 9420720
(71) Applicant: BLUE CIRCLE HEATING LIMITED, Rugby, Warwickshire CV21 3JH (GB)
(72) Inventor: Excell, Michael John, Stratford-on-Avon, Warwickshire CV37 7LP (GB)
(74) Representative: Lawrence, Brian Richard

(57) **Abstract**

A gas boiler comprises a gas burner arrangement 2,3, a heat exchanger 1 and a flue hood/outlet member 4, which are clamped together by means of a pair of spaced apart clamping members 5,6, respective ends of each of the clamping members 5,6 being pivotally located in slots 10,13 in a rear supporting plate 7 (Fig. 2).

## Description

This invention relates to gas boilers, and is especially applicable to gas central heating boilers.

The construction of gas boilers is becoming increasingly important in order to minimise manufacture and assembly costs, and also to reduce weight constraints which are particularly important as regards wall-hung boilers.

Gas boilers essentially consist of a gas burner arrangement, a heat exchanger which is heated by the gas burner and a flue gas arrangement, all of which are secured together and contained within an outer casing along with the other essential parts of the gas boiler.

It is an object of the present invention to provide a gas boiler of improved construction, embodying a novel way of mounting the gas burner arrangement, the heat exchanger, and the flue gas arrangement.

According to the present invention there is provided a gas boiler comprising a gas burner arrangement, a heat exchanger, and a flue gas arrangement which are clamped together by means of a pair of spaced apart clamping members, respective ends of each of the clamping members being located in a supporting plate.

In carrying out the invention it may be arranged that said gas burner arrangement, said heat exchanger and said flue gas arrangement are disposed one above the other, and that each of the clamping members comprises upper and lower arm members each pivotally mounted at one of their ends on a rear supporting member, said gas burner arrangement, said heat exchanger and said flue gas arrangement being disposed between said arms, the free ends of said upper and lower arms being secured together.

In a preferred gas boiler it will be arranged that said gas burner arrangement comprises a sump/combustion chamber member having a gas burner which is retained therein by said lower arm of at least one of said clamping members.

Advantageously, spring means may be provided interposed between said lower arm and said sump/combustion chamber member, and/or between said lower arm and said gas burner.

An exemplary embodiment of the invention will now be described, reference being made to the accompanying drawings, in which:
Fig. 1, is a front view of part of a gas boiler in accordance with the present invention; and
Fig. 2, is a cross-sectional side view of the part of the gas boiler depicted in Fig. 1.

The gas boiler which is to be described is described in greater detail in GB 2285117A, and for convenience only those parts of the gas boiler which are relevant to the present invention will be described herein.

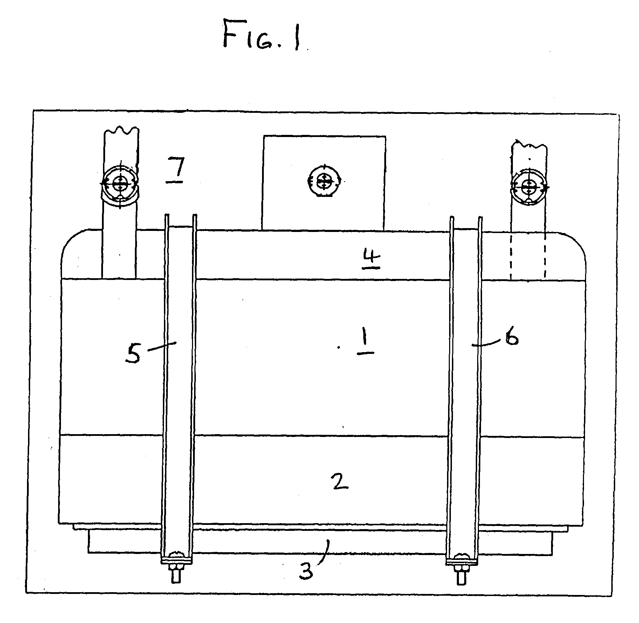

In the front view shown in Fig. 1 of the drawings, a heat exchanger 1 is shown clamped between a one-piece sump/combustion chamber member 2, into which is fitted a gas burner 3, and a typically die cast flue hood/outlet member 4. The clamping is effected by two clamping members 5 and 6, which extend from a generally vertical supporting plate 7, which forms the rear of the boiler casing (not shown), whereby the clamping members 5 and 6 not only maintain the parts in compressive contact, but also support them on the plate 7.

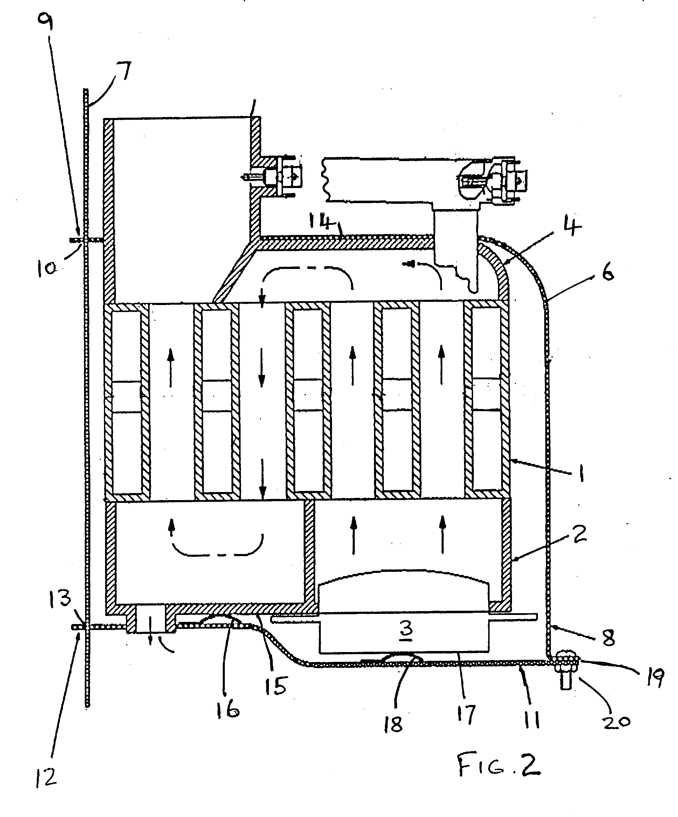

In Fig. 2 of the drawings, the clamping member 6 of Fig. 1 is shown, which clamps together the sump/combustion chamber member 2, the heat exchanger 1 and the flue hood/outlet member 4. The clamping member 6 comprises an upper arm member 8 of generally right angular shape, one end 9 of which is pivotally mounted in a slot 10 in the supporting plate 7, and a lower arm member 11, one end 12 of which is pivotally mounted in a slot 13 in the supporting plate 7. In operation of the clamping arm 6, the upper arm 8 bears against the top surface 14 of the flue hood/outlet member 4, and the lower arm 11 bears against the under surface 15 of the sump/combustion chamber member 2, via an interposed spring 16, and also against the under surface 17 of the gas burner 3, via an interposed spring 18. The free ends 19 of the upper and lower arms 8 and 11 are secured together by means of a nut and bolt 20.

The other clamping member 5 of Fig. 1 is configured and operates in the same way .

It has been found that use of the clamping members 5 and 6, with the springs 16 and 18, provides a quick, efficient and low weight means of clamping together the sump/combustion chamber member 2, the heat exchanger 1 and the flue hood/outlet member 4, which ensures the required seating between the parts regardless of expected manufacturing tolerances and expansion and contraction effects.

Although particularly applicable to gas central heating boilers, the invention may be applicable to other forms of gas boiler.

## Claims

1. A gas boiler comprising a gas burner arrangement, a heat exchanger and a flue gas arrangement which are clamped together by means of a pair of spaced apart clamping members, respective ends of each of the clamping members being located in a supporting plate.

2. A gas boiler as claimed in claim 1, in which said gas burner arrangement, said heat exchanger and said flue gas arrangement are disposed one above the other, and in which each of the clamping members comprises upper and lower arm members each pivotally mounted at one of their ends on a rear supporting member, said gas burner arrangement, said heat exchanger and said flue gas arrangement being disposed between said arms, the free ends of said upper and lower arms being secured together.

3. A gas boiler as claimed in claim 1 or claim 2, in which said gas burner arrangement comprises a sump/combustion chamber member having a gas burner which is retained therein by said lower arm of at least one of said clamping members.

4. A gas boiler as claimed in claim 3, comprising spring means interposed between said lower arm and said sump/combustion chamber member.

5. A gas boiler as claimed in claim 3 or claim 4, comprising spring means interposed between said lower arm and said gas burner.
